# EUROPEAN PATENT SPECIFICATION

(11) **EP 2 610 863 B1**
(45) Date of publication and mention of the grant of the patent: **30.11.2016**
(21) Application number: 12198503.0
(22) Date of filing: 20.12.2012
(51) Int. Cl.: G10L 15/22, G06F 3/16, H04N 21/422, H04N 21/4223, H04N 21/439, H04N 21/44, H04N 21/478, H04N 21/482

(54) **Electronic apparatus and method for controlling the same by voice input**
Elektronische Vorrichtung und Sprachsteuerungsverfahren dafür
Appareil électronique et son procédé de contrôle vocal

(30) Priority: 30.12.2011 KR 20110147454
(43) Date of publication of application: 03.07.2013
(73) Proprietor: Samsung Electronics Co., Ltd, Gyeonggi-do 16677 (KR)
(72) Inventor: Han, Sang-jin, Gyeonggi-do (KR); Kwon, Yong-hwan, Gyeonggi-do (KR); Kim, Jung-geun, Gyeonggi-do (KR)
(74) Representative: Taor, Simon Edward William

(56) References cited:
- DE-A1-102009 018 590
- US-A- 4 827 520
- US-A1- 2010 013 760
- CROWDEDBRAIN: 'Garmin3790T Voice Control System', [Online] 23 July 2010, XP054976041 Retrieved from the Internet: <URL:https://www.youtube.com/watch?v=zQOEnz uU62M> [retrieved on 2015-09-02]

## Description

The present invention relates to an electronic apparatus and a method for controlling the same, and more particularly, to an electronic apparatus controlled in accordance with a user's voice and a method for controlling the same.

Various types of electronic apparatuses have been developed and distributed thanks to the advancement in the field of electronics. Against this backdrop, home users are now provided with various types of electronic apparatuses including televisions. These electronic apparatuses for home use have a variety of functions to meet the customer's increasing demands. For example, TVs now can access the Internet and provide Internet service. Further, users can view numerous digital broadcast channels on TVs.

Thus, it is increasingly necessary for the users to be familiar with numerous and increasing methods of input to utilize the functions provided by the electronic apparatuses more efficiently. For example, the input may be made through remote control, mouse or touchpad.

However, it is still difficult to efficiently use all the functions provided by the electronic apparatuses with various input devices. For example, a remote control has to accommodate many buttons, if the remote control is the only device that is provided to control all the functions of the electronic apparatus. The problem is casual or novice users would not find it easy to handle such a remote control. In another example, if users are required to input choices through the menus displayed on the screen, it would be cumbersome for the users who have to check the complicated menu trees one by one until they find the right menu.

Accordingly, to provide an electronic apparatus which is controlled more conveniently and intuitively, technology based on voice and motion recognition has been developed. In a system to control electronic apparatuses using voice or motion recognition, a user interface (UI) is necessary to guide the user through the voice or motion recognition. However, the conventional UI relating to voice or motion recognition is provided in the same form, irrespective of the executed applications or user preference. For example, irrespective of whether the electronic apparatus (e.g., TV) is connected to a set top box to perform the function of broadcast reception or connected to a digital versatile disk to perform the function of playing back images, there is always the same form of UI provided to the user.

US 4,827,520 discloses a voice actuated control system for controlling vehicle accessories. DE 10 2009 018590 A1 discloses a vehicle voice control device for menu-driven operation of the vehicle.

Exemplary embodiments overcome the above disadvantages and other disadvantages not described above. Also, an exemplary embodiment is not required to overcome the disadvantages described above, and an exemplary embodiment may not overcome any of the problems described above.

One or more exemplary embodiments provide an electronic apparatus which can change a voice command included in voice guide information in accordance with an application executed on the electronic apparatus or user preference, and a method for controlling the same.
According to an aspect of the present invention, there is provided a method for controlling an electronic apparatus according to claim 1, and an electronic apparatus according to claim 5.

The above and/or other aspects will be more apparent by describing certain exemplary embodiments with reference to the accompanying drawings, in which:
FIGS. 1 to 3 are block diagrams of an electronic apparatus according to various exemplary embodiments;
FIGS. 4 and 5 are views provided to illustrate voice guide information in a voice task mode, according to an exemplary embodiment;
FIG. 6 is a view illustrating voice guide information specific to an application on a voice task mode, according to an exemplary embodiment;
FIG. 7 is a view illustrating voice guide information including a favorite voice command in a voice task mode, according to an exemplary embodiment;
FIG. 8 is a flowchart provided to explain a method for controlling an electronic apparatus to change some voice commands of an application, according to an exemplary embodiment; and
FIG. 9 is a block diagram of an electronic apparatus.

Certain exemplary embodiments of the present inventive concept will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the exemplary embodiments with unnecessary detail.

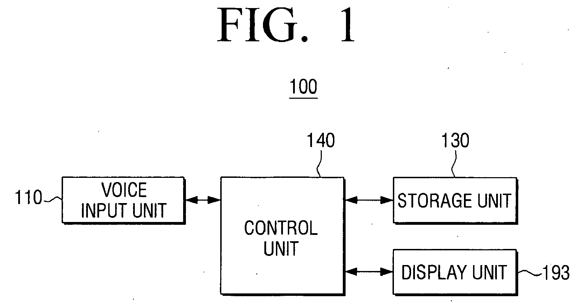

FIG. 1 is a schematic block diagram of an electronic apparatus according to an exemplary embodiment.

Referring to FIG. 1, the electronic apparatus 100 may include a voice input unit 110 (e.g., a voice input device such as a microphone, etc.), a storage unit 130 (e.g., a storage, memory, etc.), a control unit 140 (e.g., a controller, processor, etc.) and a display unit 193 (e.g., a display, etc.). The electronic apparatus 100 may be implemented as a TV, a set-top box, a PC or a digital TV or mobile phone, but not limited thereto.

The voice input unit 110 receives a voice of a user when a user utters spoken commands, words, sentences, etc. The voice input unit 110 converts the input voice into an electric voice signal and outputs the signal to the control unit 140. By way of example, the voice input unit 110 may be implemented as a microphone.

Further, the voice input unit 110 may be implemented together with the electronic apparatus 100 in a single device, or provided separately. If separately provided, the voice input unit 110 may be connected to the electronic apparatus 100 in a wired manner or via a wireless network.

The storage unit 130 may store various data and programs to drive and control the electronic apparatus 100. The storage unit 130 may also store a voice recognition module to perceive or recognize voice input through the voice input unit 110 and a motion recognition module to perceive or recognize motion input through a motion input unit.

The storage unit 130 may include a voice database and a motion database. As used herein, the voice database refers to a database in which preset voices and voice tasks matching the preset voices are recorded. The motion database refers to a database in which preset motions and motion tasks matching the preset motions are recorded.

The display unit 193 may display an image corresponding to the broadcast signal received through the broadcast receiving unit. The display unit 193 may display image data (e.g., video) which is input through an external terminal input unit. The display unit 193 may also display voice guide information providing guidance on performing a voice task and motion guide information providing guidance on performing a motion task according to the control by the control unit 140.

The control unit 140 may control the voice input unit 110, the storage unit 130, the display unit 193. The control unit 140 may include a central processing unit (CPU), a module to control the electronic apparatus 100, a Read Only Memory (ROM), and a Random Access Memory (RAM) to store data.

If a voice is input into or received through the voice input unit 110, the control unit 140 perceives the voice using the voice recognition module and the voice database. The voice recognition may be mainly categorized into an isolated word recognition method which perceives voice utterance based on isolated words, a continuous speech recognition method which perceives continuous sentences and a conversational voice, and a keyword spotting method in the hybrid form of the isolated word recognition method and the continuous speech recognition method, which detects and perceives predetermined keywords.

If the user's voice is input, the control unit 140 detects a beginning and end of the voice utterance of the user within the input voice signal, to thus determine voice segment. The control unit 140 may detect the voice segment by calculating the energy of the input voice signal, dividing the energy levels of the voice signal according to the calculated energies, and implementing dynamic programming. The control unit 140 detects the phoneme, which is the smallest unit of the voice, based on the acoustic model from the voice signal within the detected voice segment and generates phoneme data. The control unit 140 implements a Hidden Markov Model (HMM) on the generated phoneme data to generate text information. However, the method for perceiving a user's voice is not limited to the example explained above. Accordingly, various other methods may be implemented to perceive the user's voice. As a result, the control unit 140 perceives the user's voice contained in the voice signal.

As explained above, the control unit 140 performs tasks of the electronic apparatus 100 using the perceived voice. The tasks of the electronic apparatus 100 may include at least one of: power control, channel change, volume adjustment, content (e.g., video, music, photo, etc.) playback, selection of a Graphical User Interface (GUI) control displayed on the screen, or Internet service tasks (e.g., search, browsing, etc.), which may be performed by the electronic apparatus 100.

The control unit 140 determines whether or not a voice start command directing to enter voice task mode has been input.

After determining that the voice start command has been input, the control unit 140 changes the mode of the electronic apparatus 100 to the voice task mode. As used herein, the 'voice task mode' refers to a mode in which the electronic apparatus 100 is controlled by the user's voice command input by the voice input unit 110. In addition, instead of the voice start command, another type of user command can be used to start the voice task mode. Another type of user command may include input of a specific button on the remote control, input of a specific button on the electronic apparatus 100, or a user's specific motion, etc.

In the voice task mode, the control unit 150 displays voice guide information on the display screen. The voice guide information may include a plurality of voice commands to inform the user of voice commands available to perform tasks in the voice task mode.

In response to the user's specific command, the control unit 140 changes at least one of the plurality of voice commands included in the voice guide information with other voice commands. As used herein, the user's 'specific command' may be a user's command directing the electronic apparatus to execute a specific application, or to display the user's preferred voice command.

The voice guide information may include a fixed command area on which a fixed subset of voice commands from among a plurality of voice commands (e.g., "Power off' voice command) are displayed, and a variable command area in which the voice command may vary. Accordingly, in response to the user's specific command, the control unit 140 may change the voice command of the voice guide information which is included in the variable area with a different command.

According to an exemplary embodiment, in response to a user's command directing the electronic apparatus to execute a specific application, the control unit 140 may execute the application corresponding to the user's command. The control unit 140 may then change at least one command of the plurality of voice commands included in the voice guide information with a voice command necessary for the currently- executed application.

The voice command necessary for the application may be stored at the storage unit 130 of the electronic apparatus 100 during installation of the application. Then in response to a command directing the electronic apparatus to execute the application, the control unit 140 may read out the stored voice command necessary for the application and display the read voice command on the display unit 193.

In another aspect of exemplary embodiment, in response to a user's command directing the electronic apparatus to display the user's preferred voice command, the control unit 140 may change at least one command from among the plurality of voice commands included in the voice guide information with the user's preferred command. The user's preferred voice command may be a voice command registered by the user in advance by using a voice command setting menu.

The changed voice guide information may include the voice command to return to the voice guide information before the change. By way of example, a voice command "Finish" may be included as a voice command to return to the voice guide information before the change voice command information.

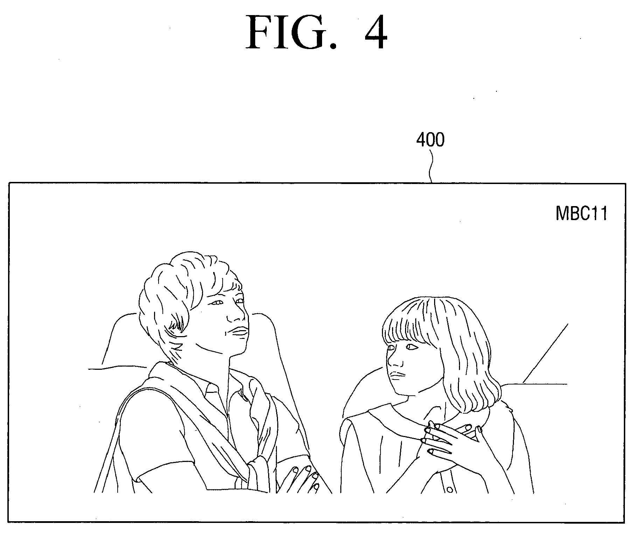

Accordingly, the user is able to perform the voice task mode by utilizing the voice guide information which is optimized for each application and which meets the user's preference. The exemplary embodiments will be explained in greater detail below with reference to FIGS. 4 to 7.

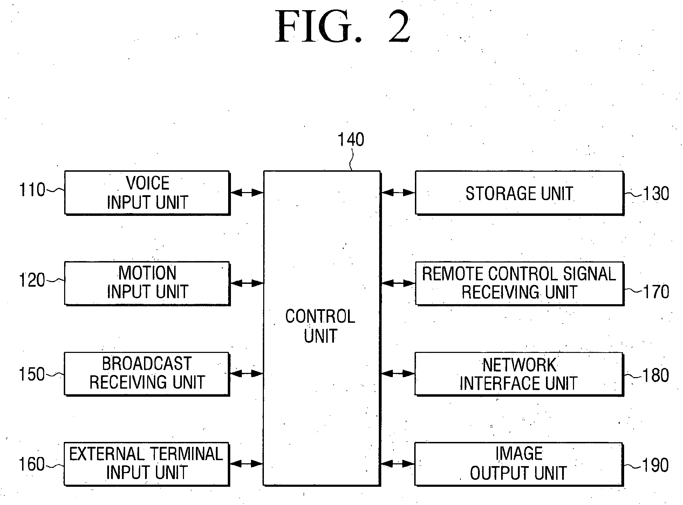

FIG. 2 is a block diagram of the electronic apparatus 100 according to another aspect of an exemplary embodiment. Referring to FIG. 2, the electronic apparatus 100 may include a voice input unit 110, a motion input unit 120, a storage unit 130, a control unit 140, a broadcast receiving unit 150 (e.g., a tuner, a broadcast receiver, etc.), an external terminal input unit 160 (e.g., an external input, etc.), a remote control signal receiving unit 170 (e.g., remote control receiver, etc.), a network interface unit 180 (e.g., a network interface card, etc.), and an image output unit 190 (e.g., an image input device, camera, etc.). Referring to FIG. 2, the electronic apparatus 100 may be implemented as a set-top box, smart TV, etc.

Since the voice input unit 110, the storage unit 130, and the control unit 140 have been explained above with reference to FIG. 1, repetitive explanation thereof will be omitted for the sake of brevity.

The motion input unit 120 receives an image signal of a user's photographed motion (e.g., successive frames) and provides the same to the lens and the image sensor. By way of example, the motion input unit 120 may be implemented as a camera unit 120 which includes a lens and an image sensor. Further, the motion input unit 120 may be provided integrally with the electronic apparatus 100, or provided separately. If provided separately, the motion recognition unit 120 may connect to the electronic apparatus 100 in a wired manner or via a wireless network.

The broadcast receiving unit 150 receives an external broadcast signal in a wired or wireless manner. The broadcast signal may include video, audio and additional data (e.g., EPG, metadata, etc.). The broadcast receiving unit 150 may receive the broadcast signal from a variety of types broadcast signals including terrestrial broadcasting, cable broadcasting, satellite broadcasting, or internet broadcasting.

The external terminal input unit 160 may receive image data (e.g., video, photo, etc.) or audio data (e.g., music, etc.) from a source external to the electronic apparatus 100. The external terminal input unit 160 may include at least one of a High-Definition Multimedia Interface (HDMI) input terminal 161, a component input terminal 162, a PC input terminal 163, or a USB input terminal 164. The remote control signal receiving unit 170 may receive a remote control signal from outside the remote controller. The remote control signal receiving unit 170 may receive the remote control signal when the electronic apparatus 100 is in voice task mode or motion task mode. Remote control signal receiving unit 170 may be implemented using a wired or wireless communication interface, or as a one-way or a two-way communication interface.

The network interface unit 180 may connect the electronic apparatus 100 to an external device (e.g., server, another electronic apparatus) under control of the control unit 140. The control unit 140 may control the external device to download an application from the external device connected via the network interface unit 180 to provide an internet service such as web browsing to a user, or to receive image data, audio data, and text data from an external apparatus. The network interface unit 180 may be implemented as a wired or wireless communication interface, or as various types of two-way communication interfaces. For example, the network interface unit 180 may be at least one of Ethernet 181, wireless LAN 182, and Bluetooth 183.

The image output unit 190 may output an external broadcast signal received through the broadcast receiving unit 150, or data input at the external terminal input unit 160, or data stored at the storage unit 130, or data received through the network interface 180 to an external electronic apparatus (e.g., monitor, TV, speaker, etc). In addition, if the electronic apparatus 100 is equipped with the display or a speaker etc, the output unit 190 may output through the display or the speaker, etc.

If receiving a motion through the motion input unit 120, the control unit 140 perceives the motion by using the motion recognition module and the motion database. The motion recognition may include perceiving continuous object motions, by distinguishing an image (e.g., successive frames) input through the motion input unit 120 into a background and an object which is subject to the user motion areas (e.g., a user's hand). If the user's motion is input, the control unit 140 stores the received image in units of frames and detects an object by using the stored frames. The control unit 140 detects the object by detecting at least one of shape, color or motion of the object included in the frames. The control unit 140 may trace the detected motion of the object by using the location of the object or the shape of each object respectively included in the plurality of frames.

The control unit 140 determines a user's motion in accordance with the motion of the traced object. By way of example, the control unit 140 determines a user's motion by using at least one of changes in the shape of the object, speed, location and direction of the object. The user's motion may include a grab in which the user clenches his hand, a pointing move in which the user motions to move the indicated cursor by hand, a slap in which the user moves his hand to one direction above a predetermined speed, a shake in which the user waves his hand left/right or up/down, and a rotation in which the user rotates his hand. The technical concept of an exemplary embodiment may be applicable to motions other than those explained above. By way of example, the user's motion may additionally include a spread motion in which the user unfolds his clenched hand and if a hand is in a fixed position for predetermined time, it may be determined as a specific motion.

The control unit 140 determines if the object escapes a certain area (e.g., 40 cm x 40 cm square) within a certain time (e.g., 800 ms) to thus determine whether the user's motion is the pointing move or the slap. If the object escapes the certain area within the certain time, the control unit 140 may determine the user's motion to be the slap. In another example, if determining that the speed of the object is below a preset speed (e.g., 30 cm/s), the control unit may determine the user's motion to be the pointing move. If determining that the speed of the object exceeds the preset speed, the control unit 140 determines the user's motion to be the slap.

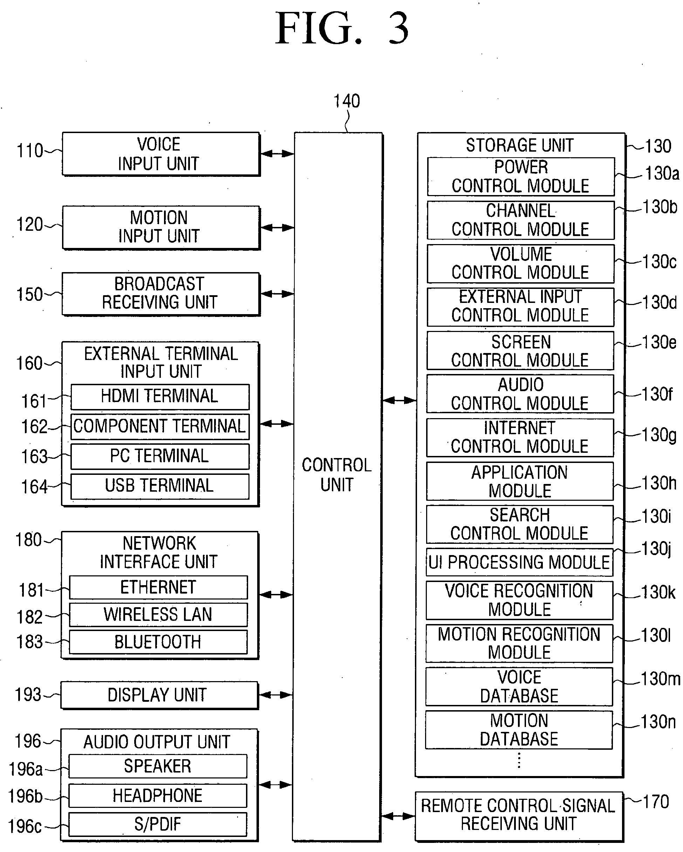

FIG. 3 is a block diagram of the electronic apparatus 100 according to another aspect of an exemplary embodiment. Referring to FIG. 3, the electronic apparatus 100 may include a voice input unit 110, a motion input unit 120, a storage unit 130, a control unit 140, a broadcast receiving unit 150, an external terminal input unit 160, a remote control signal receiving unit 170, a network interface unit 180, a display unit 193 and an audio output unit 196. The electronic apparatus 100 may be a digital TV, but not limited thereto.

Since the voice input unit 110, the motion input unit 120, the storage unit 130, the control unit 140, the broadcast receiving unit 150, the external terminal input unit 160, the remote control signal receiving unit 170, the network interface unit 180, the display unit 193 are identical to those with the same reference numerals explained above with reference to FIGS. 1 and 2, the detailed explanation thereof will be omitted for the sake of brevity.

The audio output unit 196 outputs sound corresponding to the broadcast signal, or outputs sound received through the network interface 180, under control of the control unit 140. The audio output unit 196 may include at least one of a speaker 196a, a headphone output terminal 196b or S/PDIF output terminal 196c.

The storage unit 130 may include a power control module 130a, a channel control module 130b, a volume control module 130c, an external input control module 130d, a screen control module 130e, an audio control module 130f, an internet control module 130g, an application module 130h, a search control module 130i, a UI processing module 130j, a voice recognition module 130k, a motion recognition module 130l, a voice database 130m, and a motion database 130n. The modules 130a to 130n may be implemented as software to perform the functions of power control, channel control, volume control, external input control, screen control, audio control, internet control, application execution, search control, or UI processing. The control unit 140 may perform a corresponding function by executing the software stored at the storage unit 130.

As explained above, each control module 130a to 130n may be implemented not only by executing the software stored in the storage unit 130, but also by implementing each module in separate hardware.

Hereinbelow, various aspects of exemplary embodiments will be explained in detail with reference to FIGS. 4 to 7.

According to an exemplary embodiment, the control unit 140 receives a broadcast signal from an external broadcast station via the broadcast receiving unit 150, and performs signal-processing on the received broadcast signal. Referring to FIG. 4, the control unit 140 then displays the signal-processed broadcast image 400 on the display unit 193.

In response to a voice start command received through the voice input unit 110, the control unit 140 perceives the voice start command and thus changes to the voice task mode. As used herein, the 'voice start command' refers to a user command directing to change the operation to the voice task mode in which the electronic apparatus 100 is controlled by the user's voice as input to the voice input unit 110. Another type of user command may be used to start the voice task mode in replace of the voice start command. Another type of user command may include input of a specific button on the remote control, input of a specific button on the electronic apparatus 100, a user's specific motion, etc.

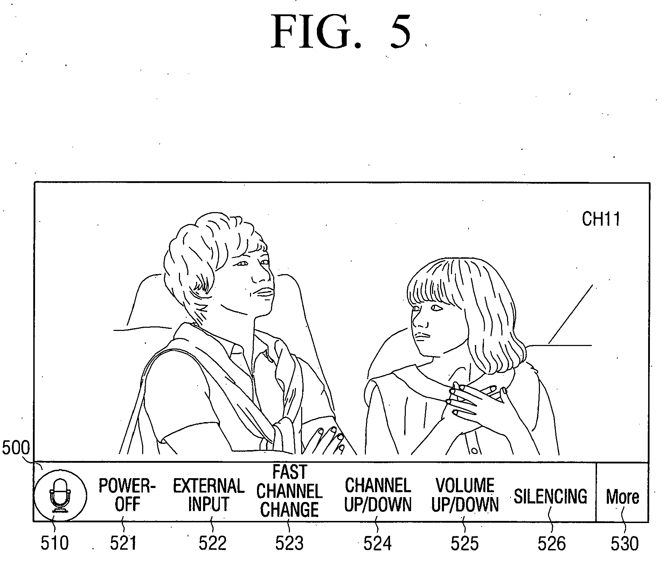

In the voice task mode, the control unit 140 displays first voice guide information 500 to perform the voice task mode (see FIG. 5). The first voice guide information 500 may be displayed on the bottom of the displayed broadcast image.

The first voice guide information 500 may include an icon 510 indicating the current mode of the display apparatus to be in voice task mode and a plurality of voice commands 521 to 526, 530 guiding the user's voice. The plurality of voice commands may include power-off voice command 521, an external input voice command 522, a fast channel change voice command 523, a channel up/down voice command 524, a volume up/down voice command 525, a silencing voice command 526, and a MORE voice command 530. By using the MORE voice command 530, the user may view more voice commands than those currently displayed. The power-off voice command 521 and the MORE voice command 530 may be placed in a fixed command area which is fixedly displayed, while the external input voice command 522, the fast channel change voice command 523, the channel up/down voice command 524, the volume up/down voice command 525, the silencing voice command 526 may be placed in a changeable command area which is subject to change.

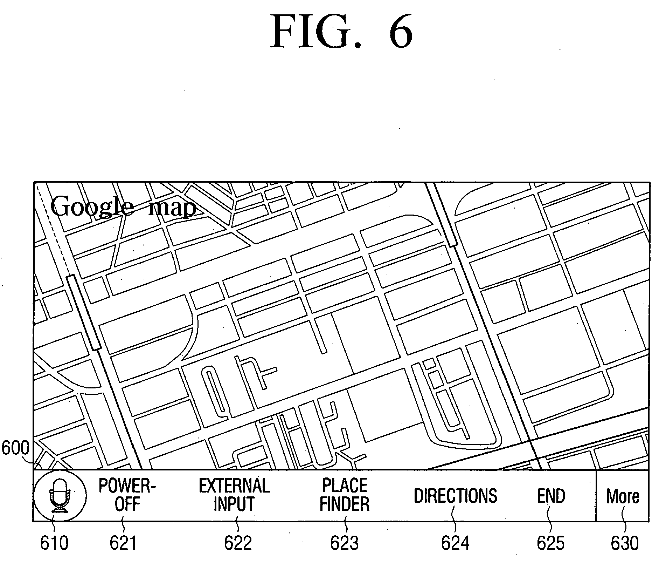

Referring to FIG. 6, in response to a command directing the electronic apparatus to execute a map application, the control unit 140 may execute the map application and change the first voice guide information 500 to the second voice guide information 600 corresponding to the map application.

Specifically, after executing of the map application, the control unit 140 reads out voice commands corresponding to the map application from among the voice commands stored in the storage unit 130. The control unit 140 then changes the voice command displayed in the changeable command area with the read voice commands corresponding to the map application.

By way of example, referring to FIG. 6, the control unit 140 displays an icon 610 to indicate that the current mode of the display device is voice task mode, the power-off voice command 621, and the MORE voice command 630 as these are displayed in the fixed command area. However, the control unit 140 may change the external input voice command 522, the fast channel change voice command 523, the channel up/down voice command 524, the volume up/down voice command 525, the silencing voice command 526 with an external input voice command 622, a place finder voice command 623, a directions-giving voice command 624, and an end voice command 625. The end voice command 625 guides the user's voice to return to the voice guide information before change in voice commands. With the executing of the end voice command 625, the control unit 140 may end the corresponding application.

Accordingly, the user is easily able to check the functions currently available by using the map application, from the voice guide information.

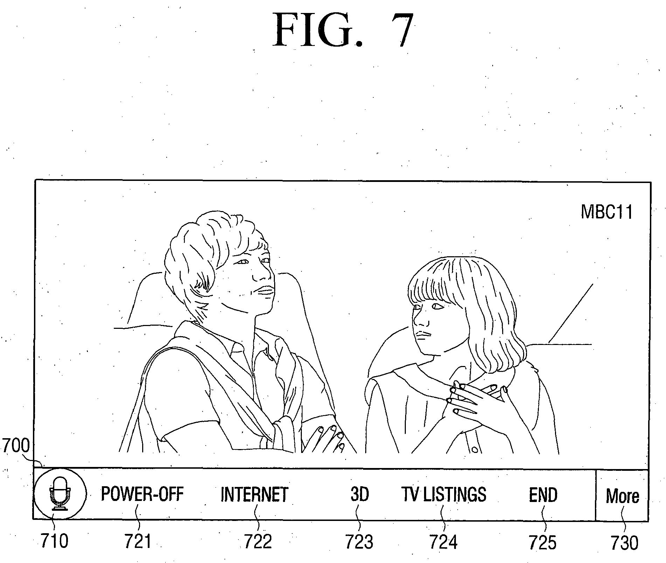

In another aspect of an exemplary embodiment, referring to FIG. 5, if the user command directing the electronic apparatus to execute the favorite voice command is input in a state that the first voice guide information is displayed (e.g., if user voice "Favorite" is input), referring to FIG. 7, the control unit 140 changes the voice guide information 500 to third voice guide information 700 which includes the favorite voice commands.

Specifically, if the user's command directing the electronic apparatus to execute the favorite voice command is input, the control unit 140 reads out the favorite voice command stored in the storage unit 130. The control unit 140 then changes the voice command displayed on the changeable command area with the read favorite voice commands.

By way of example, referring to FIG. 7, the control unit 140 displays an icon 710 to indicate that the current mode of the display device is voice task mode and the power-off voice command 721 and the MORE voice command 730 as these are displayed on the fixed command area. However, the control unit 140 may change the external input voice command 522, the fast channel change voice command 523, the channel up/down voice command 524, the volume up/down voice command 525, and the silencing voice command 526 displayed on the changeable command area with the user's favorite voice commands such as an internet voice command 722, a 3D voice command 723, a TV listings voice command 724 and an end voice command 725. The end voice command 725 guides the user's voice to return to the first voice guide information before change.

Accordingly, the user is able to control the electronic apparatus 100 using his favorite voice commands.

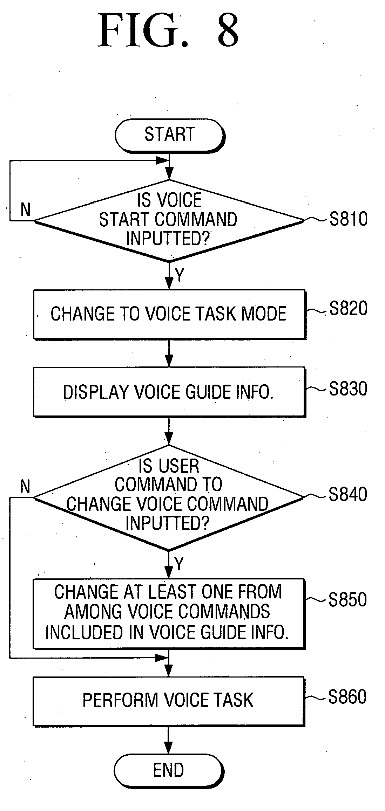

Referring to FIG. 8, a method for changing voice commands on the voice guide information according to an exemplary embodiment will be explained in greater detail below.

The electronic apparatus 100 determines if the voice start command is input (S810). The voice start command refers to the user's command directing to change the current mode of the electronic apparatus 100 to the voice task mode.

If the voice start command is input (S810-Y), the electronic apparatus 100 changes the control mode of the electronic apparatus 100 to the voice task mode (S820). Otherwise, the electronic apparatus returns to the step of determining whether the voice start command is input (S810-N). In the voice task mode, the electronic apparatus 100 is controlled by the user's voice input or received through the voice input unit 110.

In the voice task mode, the electronic apparatus 100 displays the voice guide information (S830). If the electronic apparatus 100 performs a function of receiving a broadcast, the voice guide information may include voice commands to control the broadcast receiving function.

The electronic apparatus 100 determines if the user's command directing to change the voice command is input (S840). By way of example, the electronic apparatus 100 determines if the user's command directing the electronic apparatus to execute a specific application (e.g., map application), and if the user's command directing to display the favorite voice command is input.

If it is determined that the user's command directing to change the voice command is input (S840-Y), the electronic apparatus 100 changes at least one of voice commands included in the voice guide information (S850). Otherwise, the electronic apparatus performs the voice task corresponding to the user's command according the voice guide information (S860) Among the voice commands included in the voice guide information, the voice command displayed on the changeable command area may be the at least one voice command to be changed.

By way of example, if the user's command directing to execute a specific application is input as the command to change the voice command, among the voice commands included in the voice guide information, the electronic apparatus 100 may change the voice commands displayed in the changeable command area with a voice command corresponding to the specific application. If the user's command directing the electronic apparatus to display a favorite voice command is input as the command to change the voice command, among the voice commands included in the voice guide information, the electronic apparatus 100 may change the voice command displayed on the changeable command area with the favorite voice command.

The electronic apparatus 100 performs voice tasks using the changed voice guide information (S860).

As explained above, since different voice guide information is provided depending on the application executed on the electronic apparatus and user preference, the user is able to control the electronic apparatus more conveniently and efficiently.

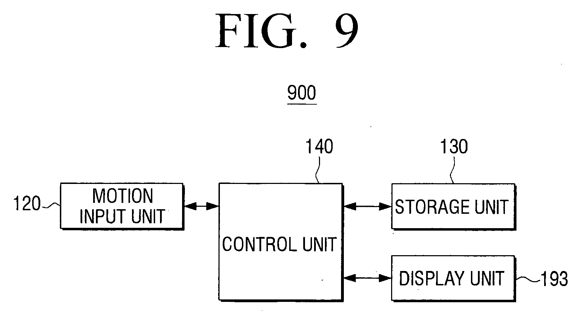

An exemplary arrangement where the motion item is changed will be explained below with reference to FIG. 9.

Referring to FIG. 9, an electronic apparatus 900 according to an arrangement may include a motion input unit 120, a storage unit 130, a control unit 140 and a display unit 193. The motion input unit 120, the storage unit 130, the control unit 140 and the display unit 193 are similar to those explained above with reference to FIGS. 1 to 3.

That is, if a motion start command is input through the motion input unit 120, the control unit 140 changes the mode of the electronic apparatus to a motion task mode in which the electronic apparatus is controlled in accordance with the user's motion. The control unit 140 then displays the motion guide information including a plurality of motion items to perform the motion task mode on the electronic apparatus 900.

If a command directing the electronic apparatus to execute an application is input in a state that the motion guide information is displayed, the control unit 140 may change at least one of the plurality of motion items with a motion item corresponding to the application.

As explained above, since the motion command is changed in accordance with the application executed on the electronic apparatus, the user is able to control the electronic apparatus more conveniently and efficiently.

The embodiments described above assigned a remote control as an external device to control the electronic apparatus 100, however this is just an exemplary embodiment. The electronic apparatus 100 may also be controlled by using a portable device, such as smart phone or a PDA, etc.

Program codes to be executed by a computer or processor to perform a control method according to various aspects of exemplary embodiments may be recorded on various types of recording media. Specifically, the program codes may be recorded on a variety of recording media readable on a terminal, such as, RAM (Random Access Memory), Flash memory, ROM (Read Only Memory), EPROM (Erasable Programmable ROM), EEPROM (Electronically Erasable and Programmable ROM), register, hard disk, removable disk, memory card, USB memory, or CD-ROM.

The foregoing embodiments and advantages are merely exemplary and are not to be construed as limiting the inventive concept. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

## Claims

1. A method for controlling an electronic apparatus (100), comprising:
receiving, by the electronic apparatus, a voice start command while the electronic apparatus is executing a first application arranged to receive a broadcast signal;
in response to the receiving the voice start command, changing a mode of the electronic apparatus to a voice task mode in which the electronic apparatus is controlled in accordance with a user's voice, and displaying on a display screen the received broadcast signal and voice guide information including:
a changeable command area in which a plurality of voice command guides (522 to 526), for commanding the electronic apparatus to perform tasks corresponding to the first application in the voice task mode, are displayed; and
a fixed command area in which voice command guides (521, 530) are fixed and unchangeable are displayed;
the method further comprising changing the plurality of voice command guides displayed in the changeable command area with different voice command guides in accordance with a user's voice input,
wherein the changing comprises;
receiving a command directing the electronic apparatus to execute a map application and executing the map application; and
in response to the command directing the electronic apparatus to execute the map application, changing the plurality of voice command guides displayed in the changeable command area with voice command guides (622, 623, 624, 625) corresponding to the map application and displaying the map application.

2. The method of claim 1, wherein the fixed command area includes a voice command guide to perform a power-off function of the electronic apparatus.

3. The method of claim 1 or 2, wherein the changing comprises:
receiving a command directing the electronic apparatus to display a favourite voice command guides; and
changing at least one voice command guides from among the plurality of voice command guides with the favourite voice command guide in response to receiving the command directing the electronic apparatus to display the user's favourite voice command guide.

4. The method of any of claims 1 to 3, wherein at least one of the voice command guides corresponding to the map application includes a voice command guide to return to the voice guide information displayed prior to the changing of the voice command guides in the changeable command area.

5. An electronic apparatus (100), comprising:
a voice input device (110) which is configured to receive a voice input;
a display screen (193) displaying a first application arranged to receive a broadcast signal; and
a controller (140) which is configured to, in response to the voice input device receiving a voice start command while the electronic apparatus is executing a first application, change a mode of the electronic apparatus to a voice task mode in which the electronic apparatus is controlled in accordance with a user's voice and to cause the display screen to display, in addition to the received broadcast signal, voice guide information including:
a changeable command area in which a plurality of voice command guides (522 to 526), for commanding the electronic apparatus to perform tasks corresponding to the first application in the voice task mode, are displayed; and
a fixed command area in which voice command guides (521, 530) in which voice commands are fixed and unchangeable are displayed;
wherein the controller is configured to change the plurality of voice command guides displayed in the changeable command area with different voice command guides in accordance with a user's voice input, wherein, in response to a user's command directing the electronic apparatus to execute a map application, the controller is configured to execute the map application, to display the map application on the display screen, and to change the plurality of voice command guides displayed in the changeable command area with voice command guides (622, 623, 624, 625) corresponding to the map application.

6. The electronic apparatus of claim 5, wherein the fixed command area includes a voice command guide to perform a power-off function of the electronic apparatus.

7. The electronic apparatus of claim 5 or 6, wherein, if a command directing the electronic apparatus to display a favourite voice command guide is received, the controller changes at least one voice command guide from among the plurality of voice command guides with the favourite voice command guide,

8. The electronic apparatus of any of claims 5 to 7, wherein at least one of the voice command guides corresponding to the map application includes a voice command guide to return to the voice guide information displayed prior to the changing of the voice command guides in the changeable command area.

## Patentansprüche

1. Verfahren zum Steuern einer elektronischen Vorrichtung (100), das Folgendes beinhaltet:
Empfangen, durch die elektronische Vorrichtung, eines Sprachstartbefehls, während die elektronische Vorrichtung eine erste Anwendung zum Empfangen eines Broadcast-Signals ausführt;
Ändern, als Reaktion auf den Empfang des Sprachstartbefehls, eines Modus der elektronischen Vorrichtung in einen Sprachaufgabenmodus, in dem die elektronische Vorrichtung über die Sprache des Benutzers gesteuert wird, und Anzeigen des empfangenen Broadcast-Signals und der Sprachführungsinformationen auf einem Anzeigeschirm, einschließlich:
eines änderbaren Befehlsbereichs, in dem eine Mehrzahl von Sprachbefehlsführungen (522 bis 526) zum Anweisen der elektronischen Vorrichtung zum Ausführen von Aufgaben entsprechend der ersten Anwendung in dem Sprachaufgabenmodus angezeigt wird; und
eines festen Befehlsbereichs, in dem Sprachbefehlsführungen (521, 530) festgelegt sind und unveränderbar angezeigt werden;
wobei das Verfahren ferner das Ändern der Mehrzahl von Sprachbefehlsführungen beinhaltet, die in dem änderbaren Befehlsbereich angezeigt werden, mit unterschiedlichen Sprachbefehlsführungen gemäß einer Spracheingabe des Benutzers,
wobei das Ändern Folgendes beinhaltet:
Empfangen eines Befehls zum Anweisen der elektronischen Vorrichtung zum Ausführen einer Map-Anwendung und Ausführen der Map-Anwendung; und
Ändern, als Reaktion auf den Befehl zum Anweisen der elektronischen Vorrichtung zum Ausführen der Map-Anwendung, der in dem änderbaren Befehlsbereich angezeigten Mehrzahl von Sprachbefehlsführungen mit Sprachbefehlsführungen (622, 623, 624, 625) entsprechend der Map-Anwendung, und Anzeigen der Map-Anwendung.

2. Verfahren nach Anspruch 1, wobei der feste Befehlsbereich eine Sprachbefehlsführung zum Ausführen einer Stromabschaltfunktion der elektronischen Vorrichtung beinhaltet.

3. Verfahren nach Anspruch 1 oder 2, wobei das Ändern Folgendes beinhaltet:
Empfangen eines Befehls zum Anweisen der elektronischen Vorrichtung zum Anzeigen einer bevorzugten Sprachbefehlsführung; und
Ändern wenigstens einer Sprachbefehlsführung aus der Mehrzahl von Sprachbefehlsführungen mit der bevorzugten Sprachbefehlsführung als Reaktion auf den Empfang des Befehls zum Anweisen der elektronischen Vorrichtung zum Anzeigen der bevorzugten Sprachbefehlsführung des Benutzers.

4. Verfahren nach einem der Ansprüche 1 bis 3, wobei wenigstens eine der Sprachbefehlsführungen entsprechend der Map-Anwendung eine Sprachbefehlsführung zum Zurückkehren zu den vor dem Ändern der Sprachbefehlsführungen angezeigten Sprachführungsinformationen in dem änderbaren Befehlsbereich beinhaltet.

5. Elektronische Vorrichtung (100), die Folgendes umfasst:
eine Spracheingabevorrichtung (110), die zum Empfangen einer Spracheingabe konfiguriert ist;
einen Anzeigeschirm (193) zum Anzeigen einer ersten Anwendung zum Empfangen eines Broadcast-Signals; und
einen Controller (140), der so konfiguriert ist, dass er als Reaktion darauf, dass die Spracheingabevorrichtung einen Sprachstartbefehl empfängt, während die elektronische Vorrichtung eine erste Anwendung ausführt, einen Modus der elektronischen Vorrichtung in einen Sprachaufgabenmodus ändert, in dem die elektronische Vorrichtung gemäß der Sprache eines Benutzers gesteuert wird, und zu bewirken, dass der Anzeigeschirm, zusätzlich zu dem empfangenen Broadcast-Signal, Sprachführungsinformationen anzeigt, die Folgendes beinhalten:
einen änderbaren Befehlsbereich, in dem eine Mehrzahl von Sprachführungsbefehlen (522 bis 526) zum Anweisen der elektronischen Vorrichtung zum Ausführen von Aufgaben entsprechend der ersten Anwendung in dem Sprachaufgabenmodus angezeigt wird; und
einen festen Befehlsbereich, in dem Sprachbefehlsführungen (521, 530), in denen Sprachbefehle fest und unveränderbar sind, angezeigt werden;
wobei der Controller zum Ändern der Mehrzahl von Sprachbefehlsführungen konfiguriert ist, die in dem änderbaren Befehlsbereich angezeigt werden, mit unterschiedlichen Sprachbefehlsführungen gemäß der Sprachangabe des Benutzers, wobei als Reaktion auf einen Befehl zum Anweisen der elektronischen Vorrichtung zum Ausführen einer Map-Anwendung durch den Benutzer der Controller so konfiguriert ist, dass er die Map-Anwendung ausführt, um die Map-Anwendung auf dem Anzeigeschirm anzuzeigen, und zum Ändern der Mehrzahl von Sprachbefehlsführungen, die in dem änderbaren Befehlsbereich angezeigt werden, mit Sprachbefehlsführungen (622, 623, 624, 625) entsprechend der Map-Anwendung.

6. Elektronische Vorrichtung nach Anspruch 5, wobei der feste Befehlsbereich eine Sprachbefehlsführung zum Ausführen einer Stromabschaltfunktion der elektronischen Vorrichtung beinhaltet.

7. Elektronische Vorrichtung nach Anspruch 5 oder 6, wobei der Controller, wenn ein Befehl zum Anweisen der elektronischen Vorrichtung zum Anzeigen einer bevorzugten Sprachbefehlsführung empfangen wird, wenigstens eine Sprachbefehlsführung aus der Mehrzahl von Sprachbefehlsführungen mit der bevorzugten Sprachbefehlsführung ändert.

8. Elektronische Vorrichtung nach einem der Ansprüche 5 bis 7, wobei wenigstens eine der Sprachbefehlsführungen entsprechend der Map-Anwendung eine Sprachbefehlsführung zum Zurückkehren zu den Sprachführungsinformationen beinhaltet, die vor der Änderung der Sprachbefehlsführungen in dem änderbaren Befehlsbereich angezeigt wurden.

## Revendications

1. Procédé de commande d'un appareil électronique (100), comprenant :
la réception, par l'appareil électronique, d'une commande de fonctionnement vocal pendant que l'appareil électronique exécute une première application agencée pour recevoir un signal diffusé ;
en réponse à la réception de la commande de fonctionnement vocal, le changement d'un mode de l'appareil électronique sur un mode de tâche vocale dans lequel l'appareil électronique est commandé conformément à la voix d'un utilisateur, et l'affichage sur un écran d'affichage du signal diffusé reçu et d'informations de guidage vocal comportant :
une zone de commandes modifiables dans laquelle une pluralité de guides de commandes vocales (522 à 526), destinés à commander l'appareil électronique pour l'exécution de tâches correspondant à la première application dans le mode de tâche vocale, est affichée ; et
une zone de commandes fixes dans laquelle des guides de commandes vocales (521,530) fixes et inchangeables sont affichés ;
le procédé comprenant en outre le remplacement de la pluralité de guides de commandes vocales affichée dans la zone de commandes modifiables par des guides de commandes vocales différents conformément à l'entrée vocale d'un utilisateur,
dans lequel le remplacement comprend :
la réception d'une commande instruisant l'appareil électronique d'exécuter une application de carte et l'exécution de l'application de carte ; et
en réponse à la commande instruisant l'appareil électronique d'exécuter l'application de carte, le remplacement de la pluralité de guides de commandes vocales affichée dans la zone de commandes modifiables par des guides de commandes vocales (622, 623, 624,625) correspondant à l'application de carte et l'affichage de l'application de carte.

2. Procédé selon la revendication 1, dans lequel la zone de commande fixe comporte un guide de commandes vocales pour exécuter une fonction de mise hors tension de l'appareil électronique.

3. Procédé selon la revendication 1 ou 2, dans lequel le remplacement comprend :
la réception d'une commande instruisant l'appareil électronique d'afficher un guide de commandes vocales favori ; et
le remplacement d'au moins un guide de commandes vocales parmi la pluralité de guides de commandes vocales par le guide de commandes vocales favori en réponse à la réception de la commande instruisant l'appareil électronique d'afficher le guide de commandes vocales favori de l'utilisateur.

4. Procédé selon l'une quelconque des revendications 1 à 3, dans lequel au moins l'un des guides de commandes vocales correspondant à l'application de carte comporte un guide de commandes vocales pour revenir aux informations de guidage vocal affichées avant le remplacement des guides de commandes vocales dans la zone de commandes modifiables.

5. Appareil électronique (100), comprenant :
un dispositif d'entrée vocale (110) qui est configuré pour recevoir une entrée vocale ;
un écran d'affichage (193) affichant une première application agencée pour recevoir un signal diffusé ; et
un contrôleur (140) configuré pour, en réponse à la réception par le dispositif d'entrée vocale d'une commande de fonctionnement vocal pendant que l'appareil électronique exécute une première application, changer un mode de l'appareil électronique en un mode de tâche vocale dans lequel l'appareil électronique est commandé conformément à la voix d'un utilisateur et pour amener l'écran d'affichage à afficher, en plus du signal diffusé reçu, des informations de guidage vocal comportant :
une zone de commandes modifiables dans laquelle une pluralité de guides de commandes vocales (522 à 526), destinés à commander l'appareil électronique pour l'exécution de tâches correspondant à la première application dans le mode de tâche vocale, est affichée ; et
une zone de commandes fixes dans laquelle des guides de commandes vocales (521, 530) dans lesquels les commandes vocales sont fixes et inchangeables sont affichés ;
dans lequel le contrôleur est configuré pour remplacer la pluralité de guides de commandes vocales affichés dans la zone de commandes modifiables par des guides de commandes vocales différents conformément à l'entrée vocale d'un utilisateur, dans lequel, en réponse à une commande d'utilisateur instruisant l'appareil électronique d'exécuter une application de carte, le contrôleur est configuré pour exécuter l'application de carte, afficher l'application de carte sur l'écran d'affichage, et remplacer la pluralité de guides de commandes vocales affichés dans la zone de commandes modifiables par des guides de commandes vocales (622, 623, 624,625) correspondant à l'application de carte.

6. Appareil électronique selon la revendication 5, dans lequel la zone de commandes fixes comporte un guide de commandes vocales pour exécuter une fonction de mise hors tension de l'appareil électronique.

7. Appareil électronique selon la revendication 5 ou 6, dans lequel, si une commande instruisant l'appareil électronique d'afficher un guide de commandes vocales favori est reçue, le contrôleur remplace au moins un guide de commandes vocales parmi la pluralité de guides de commandes vocales par le guide de commandes vocales favori.

8. Appareil électronique selon l'une quelconque des revendications 5 à 7, dans lequel au moins l'un des guides de commandes vocales correspondant à l'application de carte comporte un guide de commandes vocales pour revenir aux informations de guidage vocal affichées avant le remplacement du guide de commandes vocales dans la zone de commandes modifiables.
